# EUROPÄISCHE PATENTSCHRIFT

(11) **EP 2 015 971 B1**
(45) Veröffentlichungstag und Bekanntmachung des Hinweises auf die Patenterteilung: **27.07.2011**
(21) Anmeldenummer: 07727437.1
(22) Anmeldetag: 28.03.2007
(51) Int. Cl.: B60S 1/38

(54) **WISCHBLATT**
WIPER BLADE
BALAI D'ESSUIE-GLACE

(30) Priorität: 03.05.2006 DE 102006020524
(43) Veröffentlichungstag der Anmeldung: 21.01.2009
(73) Patentinhaber: Robert Bosch GmbH, 70442 Stuttgart (DE)
(72) Erfinder: BRAUN, Hans, B-3300 Tienen (BE); DE BLOCK, Peter, B-3545 Halen (BE); WINDMOLDERS, Eric, B-3510 Kermt (BE); VAN VINCKENROYE, Liesbet, B-3300 Tienen (BE); VERTONGEN, Robert, B-3550 Heusden-Zolder (BE); LUYPAERTS, Edwin, B-2490 Balen (BE); BEELEN, Hans, B-3540 Herk de Stad (BE); BUBBA, Marcello, B-3001 Heverlee (BE); FATAN, Bart, B-3510 Kermt (BE); BRATEC, Hervé, B-3012 Wilsele (BE); BONROY, Jan, B-3001 Heverlee (BE)
(86) Internationale Anmeldenummer: PCT/EP2007/052965
(87) Internationale Veröffentlichungsnummer: WO 2007/124989

(56) Entgegenhaltungen:
- EP-A- 1 627 787
- DE-A1- 10 044 913
- DE-A1- 10 312 979
- DE-A1- 10 350 274
- FR-A- 2 851 976
- JP-A- 9 039 743
- US-A1- 2004 098 821

## Beschreibung

### Stand der Technik

Die Erfindung geht von einem Wischblatt nach dem Oberbegriff des Anspruchs 1 aus.

Aus der DE 198 35 065 A1 ist ein gelenkfreies Wischblatt bekannt, dessen Grundkörper im Wesentlichen aus einer Kopfleiste besteht, an der über einen Kippsteg eine Wischlippe angeformt ist. Die Kopfleiste besitzt einen Längskanal, in dem ein federelastisches Tragelement eingebettet ist. Dieses hat einen rechteckigen Querschnitt, wobei die Breitseite etwa parallel zur Fahrzeugscheibe verläuft. Die Breite des Tragelements nimmt vom mittleren Bereich zu den Enden hin ab. Das Tragelement besitzt durch seine Krümmung eine solche Vorspannung im Betrieb, dass das Wischblatt mit seiner Wischlippe mit einem geeigneten Anpressdruck an der Fahrzeugscheibe anliegt. Die Seite der Kopfleiste, die der Wischlippe abgewandt ist, ist flach und besitzt zum Längskanal hin eine gleichmäßige Wandstärke. Auf dem Rücken der Kopfleiste ist im mittleren Bereich des Wischblatts ein Adapter angebracht, der zum Anschluss des Wischblatts an einen Wischarm dient und mit Krallen die Kopfleiste im Bereich des Tragelements seitlich umfasst.

Aus der DE 10 334 609 A1 ist ein gelenkfreies Wischblatt mit einer Kopfleiste bekannt, an der in üblicher Weise eine
Wischlippe angeformt ist. Die Kopfleiste weist einen Längskanal zur Aufnahme eines federelastischen Tragelements mit einem quer zur Wischlippe länglich verlaufenden Querschnitt auf. An der Deckseite der Kopfleiste, die der Wischlippe abgewandt ist, ist ein Spoiler angeformt. Dieser kann aus dem gleichen Material wie die Kopfleiste oder aus einem weicheren Material bestehen. In beiden Fällen werden die Wischblätter zweckmäßigerweise in einem Extrudierverfahren hergestellt.

Ferner ist aus der DE 10 2005 009 205 A1 ein gelenkfreies Wischblatt mit einer Wischleiste bekannt, deren Kopfleiste zwei seitliche Längsnuten aufweist und deren Deckseite, die einer Wischlippe abgewandt ist, mit einem lang gestreckten, federelastischen Tragelement verbunden ist. Dieses weist in einer Richtung quer zur Kopfleiste einen rechteckigen Querschnitt auf. Das Tragelement und ein Teil der Kopfleiste werden von einer Führungsschiene umfasst, die mit längs verlaufenden Schenkeln in die seitlichen Längsnuten der Kopfleiste eingreift. Die Führungsschiene ist ihrerseits in einem Führungsprofil eines Spoilers geführt, sodass der Spoiler mit der Wischleiste fest verbunden ist.

Aus der DE 103 50 274 A1 sowie aus der DE 103 12 979 A1 ist jeweils ein Wischblatt mit dem Merkmal des Obergriffs des Anspruchs 1 bekannt.

### Offenbarung der Erfindung

Nach der Erfindung ist der Spoiler als separates Bauteil ausgebildet und umfasst mit Führungsschienen die Kopfleiste an ihren Längsseiten. Dadurch kann der Spoiler unabhängig von der Wischleiste aus einem Material hergestellt werden, das einerseits den Anpressdruck des Wischblatts nur wenig behindert und andererseits eine gute Seitenführung ermöglicht. Dabei kann es zweckmäßig sein, dass die Führungsschienen an dem Spoiler anextrudiert sind und eine größere Härte aufweisen als der übrige Spoiler.

Um das Gewicht des Spoilers zu verringern und seine Flexibilität zu verbessern, ist es vorteilhaft, dass der Spoiler auf der der Wischlippe abgewandten Seite der Kopfleiste mindestens einen zweiten Längskanal besitzt, der parallel zum ersten Längskanal verläuft und einen ähnlichen Querschnitt hat wie der erste Längskanal. Dadurch können die Führungsschienen bei der Montage der Wischleiste elastisch nach außen aufgebogen werden, sodass die Wischleiste nicht in Längsrichtung des Spoilers zwischen die Führungsschienen geschoben werden muss, sondern quer zum Spoiler zwischen die Führungsschienen eingesetzt werden kann. Somit kann an dem Spoiler mindestens ein stirnseitig geschlossenes Endstück angeformt werden, wodurch mindestens eine der sonst üblichen Endkappen des Wischblatts entfallen kann. Der zweite Längskanal kann in vorteilhafter Weise über einen Längsspalt mit dem Raum zwischen den Führungsschienen zur Aufnahme der Kopfleiste verbunden sein. Der Längsspalt begünstigt das Aufbiegen der Führungsschienen, insbesondere wenn diese aus einem härteren Werkstoff bestehen als der übrige Spoiler.

Der zweite Längskanal kann außerdem eine zweite Federschiene aufnehmen, die zusammen mit der ersten Federschiene das Tragelement bilden. Hierdurch ergeben sich weitere Modifikationsmöglichkeiten der Gesamtfedersteifigkeit des Tragelements, indem der Querschnitt einer und/oder beider Federschienen über die Länge der Federschiene in seiner Breite und/oder Höhe variiert. Dadurch können die Federeigenschaften der Federschienen in weiten Grenzen modifiziert werden, sodass die Anpresskräfte über die Länge des Wischblatts optimal an die Vorgaben des jeweiligen Einsatzfalls angepasst werden können. In der Regel werden die Breite und/oder Höhe von den Enden der Federschiene zu ihrem mittleren Bereich hin zunehmen. Grundsätzlich können auch andere Charakteristiken realisiert werden, bei denen die Breite und/oder Höhe wellenförmig oder stufenförmig zu- oder abnehmen.

Die zweite Federschiene, die parallel zur ersten Federschiene im Spoiler verläuft, kann in ihrem Querschnitt in gleicher Weise modifiziert werden wie die erste Federschiene. Außerdem können die beiden Federschienen unterschiedliche Längen besitzen, wobei vorzugsweise die zweite Federschiene kürzer gewählt wird, als die erste Federschiene. Die zweite Federschiene wird nach der Montage der Wischleiste in Längsrichtung in den Spoiler geschoben. Sie versteift in montiertem Zustand das Spoilerprofil und blockiert die Führungsschienen, sodass diese nicht mehr seitlich aufgebogen werden können.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Seitenansicht eines erfindungsgemäßen Wisch- blatts,
- Fig. 2: einen perspektivischen Schnitt entsprechend der Linie II-II in Fig. 1,
- Fig. 3: eine Variante zu Fig. 1,
- Fig. 4: eine perspektivische Ansicht eines Endes des Wisch- blatts als Variante zu Fig. 1,
- Fig. 5: eine perspektivische, teiltransparente Ansicht eines Wischblatts mit einem Tragelement, das über seine Län- ge einen variablen Querschnitt hat,
- Fig. 6: eine perspektivische, teiltransparente Ansicht eines Wischblatts mit einem ersten Tragelement, zu dem in einem Längskanal des Spoilers ein zweites Tragelement angeordnet ist,
- Fig. 7: eine Variante zu Fig. 6,
- Fig. 8: einen Querschnitt durch einen Spoiler mit anextrudier- ten Führungsschienen für die Wischleiste und
- Fig. 9: einen Querschnitt durch einen Spoiler nach Fig. 8 mit einer montierten Wischleiste mit zwei Tragelementen.

### Ausführungsformen der Erfindung

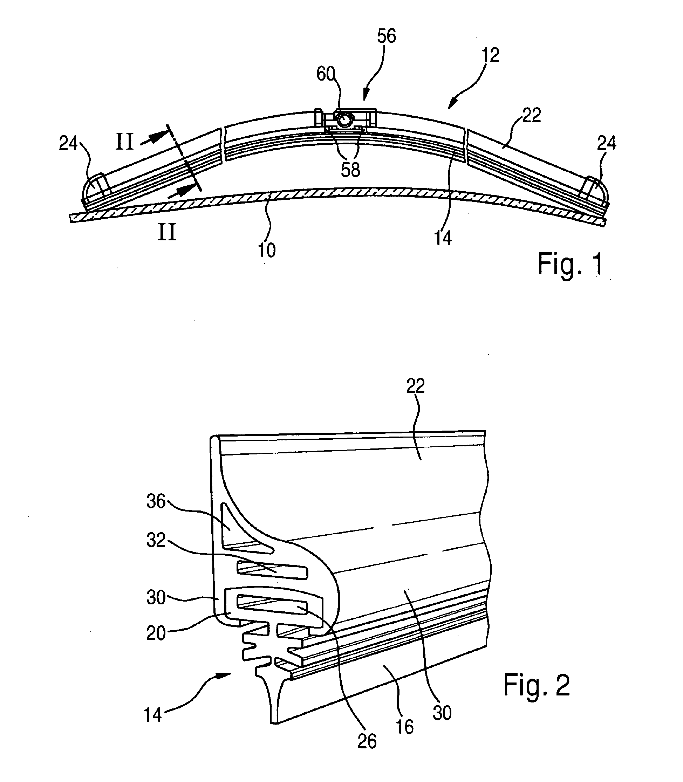

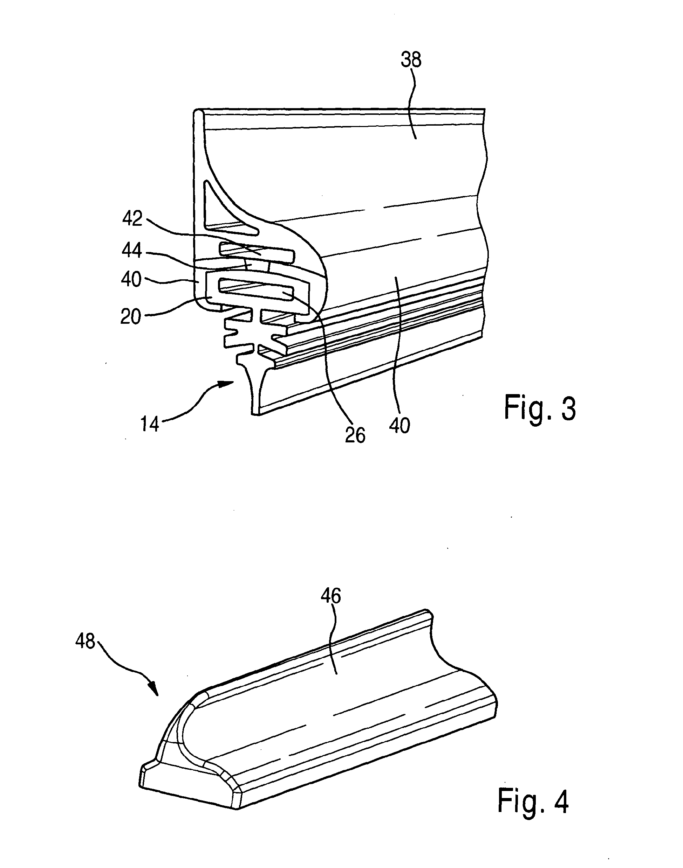

Fig. 1 zeigt ein unbelastetes Wischblatt 12 auf einer Fahrzeugscheibe 10. Es besitzt eine Wischleiste 14 mit einer Wischlippe 16 (Fig.2), die in üblicher Weise mit einer Kopfleiste 20 verbunden ist. Auf der der Wischlippe 16 abgewandten Seite der Kopfleiste 20 ist ein Spoiler 22 vorgesehen, der mit Führungsschienen 30 die Kopfleiste 20 seitlich umfasst. An den Enden des Wischblatts 12 sind Endkappen 24 aufgesetzt. Von diesen kann mindestens eine entfallen, wenn sie durch ein am Spoiler 22 angeformtes Endstück ersetzt wird, das mit 48 in der Ausführung nach Fig. 4 bei einem Spoiler 46 bezeichnet ist.

In der Kopfleiste 20 befindet sich ein Längskanal 26 zur Aufnahme einer ersten Federschiene 18, die als Tragelement für das Wischblatt 12 dient. Die Federschiene 18 ist so vorgebogen, dass sie im unbelasteten Zustand (Fig. 1) dem Wischblatt 12 eine Krümmung aufzwingt, die größer ist als die größte Krümmung der Fahrzeugscheibe 10. Ein nicht dargestellter Wischarm überträgt auf ein Anschlusselement 56 mit einer Nabe 60, das mit Krallen 58 am Wischblatt 12 befestigt ist, eine Anpresskraft, die die Wischlippe 16 des Wischblatts 12 an die Fahrzeugscheibe 10 presst, wobei eine die Wischqualität beeinflussende optimale Druckverteilung über die Länge der Wischlippe 16 angestrebt wird. Die Druckverteilung hängt unter anderem von der Krümmung der Fahrzeugscheibe 10 und dem Tragelement in Form der Federschiene 18 sowie von deren Federeigenschaften ab. Diese werden zum einen von dem Werkstoff und zum anderen von der Querschnittverteilung der Federschiene 18 über der Länge bestimmt.

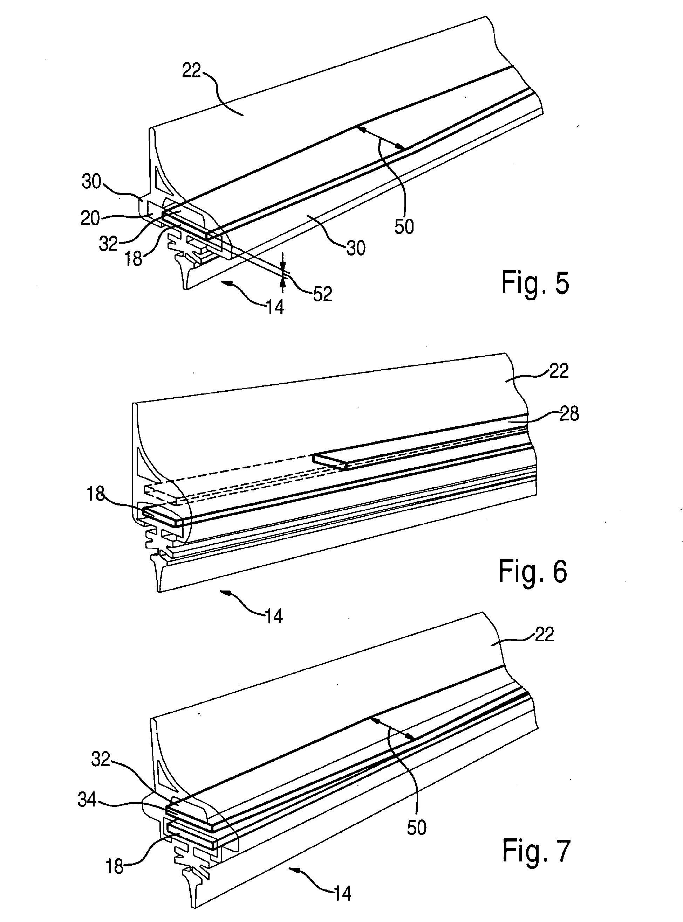

Die in Fig. 5 dargestellte Federschiene 18 besitzt eine Breite 50 und eine Höhe 52, die von den Enden zum mittleren Bereich hin zunehmen. Dies kann kontinuierlich oder gestuft erfolgen. Auch können schmalere Bereiche mit breiteren oder flachere mit höheren Bereichen abwechseln. Als weitere Variationsmöglichkeit bestehen Modifikationen, bei denen ausschließlich die Breite 50 oder die Höhe 52 verändert werden oder die Veränderungen kombiniert durchgeführt und entsprechend aufeinander abgestimmt werden.

Bei der Ausführung nach Fig. 6 besteht das Tragelement aus zwei Federschienen 18 und 28, wobei die erste Federschiene 18 in dem Längskanal 26 der Kopfleiste 20 untergebracht ist, während die zweite Federschiene 28 in einem Längskanal 32 des Spoilers 22 angeordnet ist. Die zweite Federschiene 28, die in einem Abstand parallel zur ersten Federschiene 18 auf der der Wischlippe 16 abgewandten Seite der Kopfleiste 20 verläuft, kann in der gleichen Weise modifiziert werden wie die erste Federschiene 18. Ferner können die Federschienen 18, 28 bei gleich bleibendem Querschnitt oder zusätzlich zu den anderen Modifikationen unterschiedliche Längen aufweisen. In dem dargestellten Beispiel ist die zweite Federschiene 28 kürzer als die erste Federschiene 18. Grundsätzlich kann aber auch die erste Federschiene 18 die kürzere sein. Im Vergleich zu der Ausführung nach der Fig. 6 besitzen die Federschienen 18 und 34 in der Ausführung nach Fig. 7 eine gleiche Länge, allerdings variiert ihre Breite 50 über ihre Länge.

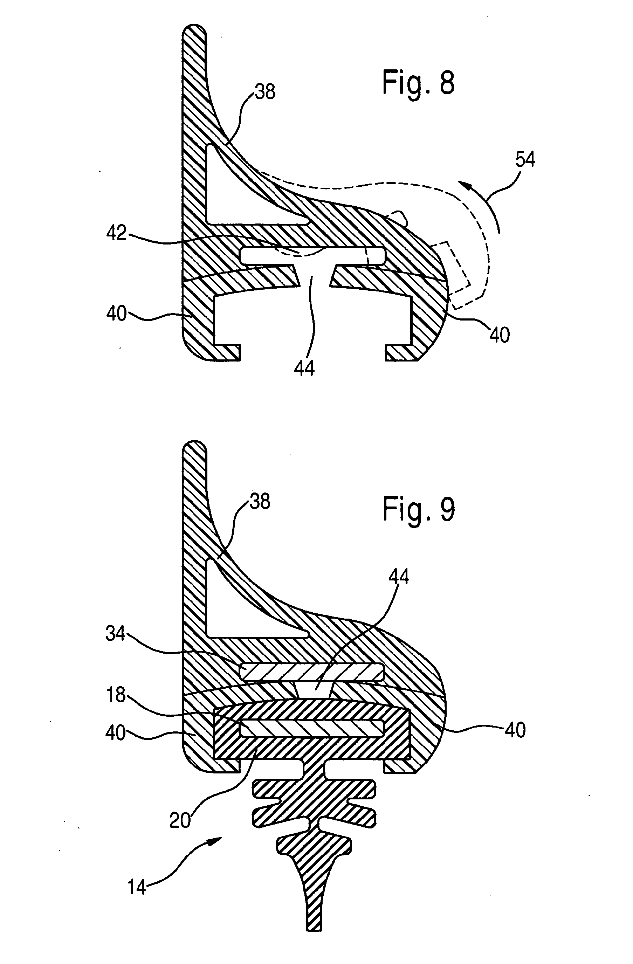

Der Werkstoff des Spoilers 22 kann so ausgewählt werden, dass der Spoiler 22 in Verbindung mit dem Längskanal 32 und gegebenenfalls einem weiteren Längskanal 36 so biegsam ist, dass seine Führungsschienen 30 zur Montage der Wischleiste 14 seitlich elastisch aufgebogen werden können. Somit muss die Wischleiste 14 nicht in Längsrichtung des Spoilers 22 montiert werden, sondern kann quer dazu zwischen die Führungsschienen 30 eingesetzt werden. Dieser Vorgang kann dadurch erleichtert werden, dass wie beim Ausführungsbeispiel nach Fig. 3, Fig. 8 und Fig. 9 gezeigt, der Längskanal 42 im Spoiler 38 über einen Längsspalt 44 mit dem Zwischenraum zwischen den Führungsschienen 40 verbunden ist. In diesem Fall lässt sich der Spoiler 38, wie in Fig. 8 mit gestrichelten Linien gezeichnet ist, leicht in Richtung des Pfeils 54 aufbiegen. Der Längsspalt 44 ist vor allem dann vorteilhaft, wenn der Spoiler 38 aus zwei Werkstoffen besteht, und zwar aus einem härteren Werkstoff für die Führungsschienen 40 und einem weicheren Werkstoff für den übrigen Spoiler 38. Dadurch wird gleichzeitig erreicht, dass der Spoiler 38 bei einer guten Seitenführung der Wischleiste 14 eine gute Biegsamkeit in Längsrichtung senkrecht zur Fahrzeugscheibe 10 besitzt.

Zur Montage des Wischblatts 12 wird zunächst die erste Federschiene 18 in den Längskanal 26 der Kopfleiste 20 eingesetzt. Danach wird die Kopfleiste 20 in das aufgebogene Profil des Spoilers 38 eingesetzt. Zum Versteifen und Blockieren der Führungsschienen 40 wird zum Schluss die zweite Federschiene 34 in den Längskanal 42 des Spoilers 38 eingesetzt, sodass die Führungsschienen 40 nicht mehr seitlich in Richtung des Pfeils 54 aufgebogen werden können (Fig. 9). Durch die erfindungsgemäßen Gestaltungsmöglichkeiten ergeben sich so viele Variationsmöglichkeiten, dass mit dem Wischblatt 12 alle möglichen Anwendungsfälle abgedeckt werden können.

## Patentansprüche

1. Wischblatt (12) mit einer Wischleiste (14), die eine Wischlippe (16) und eine daran angeformte Kopfleiste (20) besitzt, die in einem ersten Längskanal (26) ein Tragelement in Form einer Federschiene (18) mit einem flachen Querschnitt aufweist und an ihrer der Wischlippe (16) abgewandten Seite einen Spoiler (22, 38, 46) trägt, wobei der Spoiler (22, 38, 46) mit Führungsschienen (40) die Kopfleiste (20) an ihren Längsseiten umfasst, **dadurch gekennzeichnet, dass** der Spoiler (22, 38, 46) auf der der Wischlippe (16) abgewandten Seite der Kopfleiste (20) mindestens einen zweiten Längskanal (32, 42) besitzt, der parallel zum ersten Längskanal (26) verläuft und einen ähnlichen Querschnitt hat wie der erste Längskanal (26).

2. Wischblatt (12) nach Anspruch 1, **dadurch gekennzeichnet, dass** die Führungsschienen (40) an dem Spoiler (22, 38, 46) anextrudiert sind und eine größere Härte aufweisen als der übrige Spoiler (22, 38, 46).

3. Wischblatt (12) nach einem der vorhergehenden Ansprüche, **dadurch gekennzeichnet, dass** an dem Spoiler (46) mindestens ein stirnseitig geschlossenes Endstück (48) angeformt ist.

4. Wischblatt (12) nach einem der vorhergehenden Ansprüche, **dadurch gekennzeichnet, dass** der zweite Längskanal (32, 42) über einen Längsspalt (44) mit dem Raum zwischen den Führungsschienen (40) zur Aufnahme der Kopfleiste (20) verbunden ist.

5. Wischblatt (12) nach einem der vorhergehenden Ansprüche, **dadurch gekennzeichnet, dass** das Tragelement mindestens zwei Federschienen (18, 28, 34) umfasst, von denen die erste Federschiene (18) in dem ersten Längskanal (26) in der Kopfleiste (20) vorgesehen ist, während die zweite Federschiene (28, 34) in dem zweiten Längskanal (32, 42) im Spoiler (22, 38, 46) parallel zum ersten Längskanal (26) angeordnet ist.

6. Wischblatt (12) nach einem der vorhergehenden Ansprüche, **dadurch gekennzeichnet, dass** das Tragelement (18, 28, 34) einen Querschnitt aufweist, über die Länge der Federschiene (18) in seiner Breite und/oder Höhe variiert.

7. Wischblatt (12) nach Anspruch 5 oder 6, **dadurch gekennzeichnet, dass** die erste Federschiene (18) eine unterschiedliche Länge im Vergleich zur zweiten Federschiene (28, 34) besitzt.

8. Wischblatt (12) nach einem der Ansprüche 5 bis 7, **dadurch gekennzeichnet, dass** der Querschnitt einer und/oder beider Federschienen (18, 28, 34) über deren Länge in seiner Breite (50) und/oder Höhe (52) variiert.

## Claims

1. Wiper blade (12) with a wiper strip (14) which has a wiper lip (16) and a top strip (20) which is integrally formed thereon and, in a first longitudinal channel (26), has a supporting element in the form of a spring rail (18) with a flat cross section and, on the side thereof which faces away from the wiper lip (16), bears a spoiler (22, 38, 46), wherein the spoiler (22, 38, 46) together with guide rails (40) surrounds the top strip (20) on the longitudinal sides thereof, **characterized in that**, on that side of the top strip (20) which faces away from the wiper lip (16), the spoiler (22, 38, 46) has at least one second longitudinal channel (32, 42) which runs parallel to the first longitudinal channel (26) and has a similar cross section to the first longitudinal channel (26).

2. Wiper blade (12) according to Claim 1, **characterized in that** the guide rails (40) are extruded onto the spoiler (22, 38, 46) and have a greater hardness than the rest of the spoiler (22, 38, 46).

3. Wiper blade (12) according to one of the preceding claims, **characterized in that** at least one end piece (48), the end side of which is closed, is integrally formed on the spoiler (46).

4. Wiper blade (12) according to one of the preceding claims, **characterized in that** the second longitudinal channel (32, 42) is connected via a longitudinal gap (44) to the space between the guide rails (40) in order to receive the top strip (20).

5. Wiper blade (12) according to one of the preceding claims, **characterized in that** the supporting element comprises at least two spring rails (18, 28, 34), of which the first spring rail (18) is provided in the first longitudinal channel (26) in the top strip (20) while the second spring rail (28, 34) is arranged in the second longitudinal channel (32, 42) in the spoiler (22, 38, 46) parallel to the first longitudinal channel (26).

6. Wiper blade (12) according to one of the preceding claims, **characterized in that** the supporting element (18, 28, 34) has a cross section which varies in the width and/or height thereof via the length of the spring rail (18).

7. Wiper blade (12) according to Claim 5 or 6, **characterized in that** the first spring rail (18) differs in length in comparison to the second spring rail (28, 34).

8. Wiper blade (12) according to one of Claims 5 to 7, **characterized in that** the cross section of one and/or both spring rails (18, 28, 34) varies in the width (50) and/or height (52) thereof via the length of said spring rail(s).

## Revendications

1. Balai d'essuie-glace (12) comprenant une raclette de balai d'essuie-glace (14), qui possède une lèvre de balai d'essuie-glace (16) et une raclette de tête (20) façonnée sur celle-ci, qui présente, dans un premier canal longitudinal (26), un élément porteur en forme de rail élastique (18) avec une section transversale plate, et sur son côté opposé à la lèvre de balai d'essuie-glace (16), un déflecteur (22, 38, 46), le déflecteur (22, 38, 46) entourant avec des rails de guidage (40) la raclette de tête (20) sur ses côtés longitudinaux, **caractérisé en ce que** le déflecteur (22, 38, 46) possède, du côté de la raclette de tête (20) opposé à la lèvre de balai d'essuie-glace (16) au moins un deuxième canal longitudinal (32, 42), qui s'étend parallèlement au premier canal longitudinal (26) et qui a une section transversale similaire à celle du premier canal longitudinal (26).

2. Balai d'essuie-glace (12) selon la revendication 1, **caractérisé en ce que** les rails de guidage (40) sont extrudés sur le déflecteur (22, 38, 46) et présentent une plus grande dureté que le reste du déflecteur (22, 38, 46).

3. Balai d'essuie-glace (12) selon l'une quelconque des revendications précédentes, **caractérisé en ce qu'**au moins un embout (48) fermé du côté frontal est façonné sur le déflecteur (46).

4. Balai d'essuie-glace (12) selon l'une quelconque des revendications précédentes, **caractérisé en ce que** le deuxième canal longitudinal (32, 42) est connecté par le biais d'une fente longitudinale (44) à l'espace entre les rails de guidage (40) pour recevoir la raclette de tête (20).

5. Balai d'essuie-glace (12) selon l'une quelconque des revendications précédentes, **caractérisé en ce que** l'élément porteur comprend au moins deux rails élastiques (18, 28, 34) dont le premier rail élastique (18) est prévu dans le premier canal longitudinal (26) dans la raclette de tête (20), tandis que le deuxième rail élastique (28, 34) est disposé dans le canal longitudinal (32, 42) dans le déflecteur (22, 38, 46) parallèlement au premier canal longitudinal (26).

6. Balai d'essuie-glace (12) selon l'une quelconque des revendications précédentes, **caractérisé en ce que** l'élément porteur (18, 28, 34) présente une section transversale qui varie sur la longueur du rail élastique (18) en largeur et/ou en hauteur.

7. Balai d'essuie-glace (12) selon la revendication 5 ou 6, **caractérisé en ce que** le premier rail (18) possède une longueur différente par rapport au deuxième rail élastique (28, 34).

8. Balai d'essuie-glace (12) selon l'une quelconque des revendications 5 à 7, **caractérisé en ce que** la section transversale d'un ou des deux rails élastiques (18, 28, 34) varie sur sa longueur en largeur (50) et/ou en hauteur (52).
